# EUROPÄISCHE PATENTSCHRIFT

(11) **EP 2 126 385 B1**
(45) Veröffentlichungstag und Bekanntmachung des Hinweises auf die Patenterteilung: **01.04.2015**
(21) Anmeldenummer: 07819385.1
(22) Anmeldetag: 27.10.2007
(51) Int. Cl.: F16C 19/38

(54) **LAUFBAHNELEMENT UND KEGELROLLENLAGERUNG MIT DEM LAUFBAHNELEMENT**
TRACK ELEMENT AND TAPERED ROLLER BEARING COMPRISING A TRACK ELEMENT
ÉLÉMENT DE VOIE DE ROULEMENT ET ROULEMENT À ROULEAUX CONIQUES COMPORTANT L'ÉLÉMENT DE VOIE DE ROULEMENT

(30) Priorität: 04.11.2006 DE 102006052043
(43) Veröffentlichungstag der Anmeldung: 02.12.2009
(60) Teilanmeldung: 14188844.6
(73) Patentinhaber: AB SKF, 415 50 Göteborg (SE)
(72) Erfinder: KRUG, Udo, 97531 Theres (DE); OLSCHEWSKI, Armin, 97422 Schweinfurt (DE); STUBENRAUCH, Arno, 97491 Aidhausen (DE); SAAL, Peter, 97702 Münnerstadt-Wermerichshausen (DE); De VRIES, Alexander, 4003 KA Tiel (NL)
(74) Vertreter: Kohl, Thomas
(86) Internationale Anmeldenummer: PCT/EP2007/009342
(87) Internationale Veröffentlichungsnummer: WO 2008/052716

(56) Entgegenhaltungen:
- GB-A- 2 410 772
- US-A- 1 397 142
- US-A- 4 325 591
- US-A- 6 126 321

## Beschreibung

Die Erfindung betrifft eine Kegelrollenlagerung mit einem Laufbahnelement. Eine gattungsgemässe Kegelrollenlagerung ist aus der Druckschrift WO 2008/052716 A1 bekannt.

Anders als bei Gleitlagern wird bei Wälzlagern bekanntlich die Last unter einem Abwälzen übertragen, so dass die Reibung insbesondere auch bei niedrigen Drehzahlen und beim Anfahren gering ist. Die geringe Anlaufreibung und der Umstand, dass kein Einlaufen notwendig ist, sind insbesondere bei Fahrzeugen wichtige Vorteile. Der geringen Reibung entsprechen mit Vorteil geringe Leistungsverluste. Unter den Wälzlagern ist dabei das Kegelrollenlager ein nicht nur in Fahrzeugen weitverbreiteter Wälzlagertyp. Im Sinne eines nachhaltigen Wirtschaftens mit den verfügbaren Rohstoff- und Energiereserven wird weiterhin, und nichtausschließlich auf das Gebiet der Fahrzeuge begrenzt, nach Möglichkeiten gesucht, die Leistungsverluste weiter zu senken.

Eine Aufgabe der Erfindung ist es daher, eine verbesserte Kegelrollenlagerung mit einem Laufbahnelement derart zu schaffen, so dass sich bei deren Betrieb besonders geringe Leistungsverluste ergeben.

Die Aufgabe wird durch die Gegenstände der Ansprüche 1 und 2 gelöst Vorteilhafte Ausgestaltungen sind in den Unteransprüchen beschrieben.

Die Erfindung beruht dabei insbesondere auf der Kenntnis, dass bei gleichbleibender Oberflächenqualität der Abrollfläche sowie der zum Anlaufen der Wälzkörperstirnseiten vorgesehenen Innenseite des Bords des Laufbahnelements ein Hinterschnitt am Fuß des Bords zum Übergang hin zur Abrollfläche herstellungstechnisch und auch aus anderen Gründen nicht erforderlich ist. Damit kann mit Vorteil unter anderem bei gleichbleibender Festigkeit des Bords der Bord in Achsrichtung mit einer geringeren Dicke ausgebildet werden, wodurch sich wiederum auch ein kürzeres Laufbahnelement ausbilden lässt, womit mit Vorteil Material und Gewicht entsprechend eingespart wird.

Weiterhin ist es durch Verzicht auf den Hinterstich möglich, eine bestimmungsgemäße Berührfläche zwischen den Wälzkörperstirnseiten und der Innenseite des Bords durch entsprechendes Design von Wälzkörperstirnseiten und der Innenseite des Bords nahe zur Abrollfläche hin zu verlagern, wodurch mit besonderem Vorteil in besagter Berührfläche im wesentlichen ein Abrollen mit wenig Gleitanteilen stattfindet, so dass weniger Reibungsverluste entstehen und damit mit Vorteil Leistungsverluste gesenkt werden. Dabei sind die Innenseite des Bords und die Stirnseite der Wälzkörper derart gestaltet, dass die bestimmungsgemäße Berührung von der Wälzkörperhauptachse aus in einem Bereich von 85 %, insbesondere 90 % bis 98 % des Radius der Wälzkörperstirnseite stattfindet.

Weitere Vorteile, Merkmale und Einzelheiten ergeben sich aus den im folgenden beschriebenen Ausführungsbeispielen der Erfindung anhand der Figuren. Dabei zeigen:
- Figur 1: die Längsschnittflächen eines an einer Umfangsstelle längsgeschnittenen, einreihigen Kegelrollenlagers gemäß dem Stand der Technik,
- Figur 2: die Längsschnittflächen eines an einer Umfangsstelle längsgeschnittenen, einreihigen Kegelrollenlagers gemäß der Erfindung,
- Figur 3: eine Ausschnittsvergrößerung der Figur 2 und
- Figur 4: eine Darstellung entsprechend der Figur 3 für eine andere Ausführungsform der Erfindung.

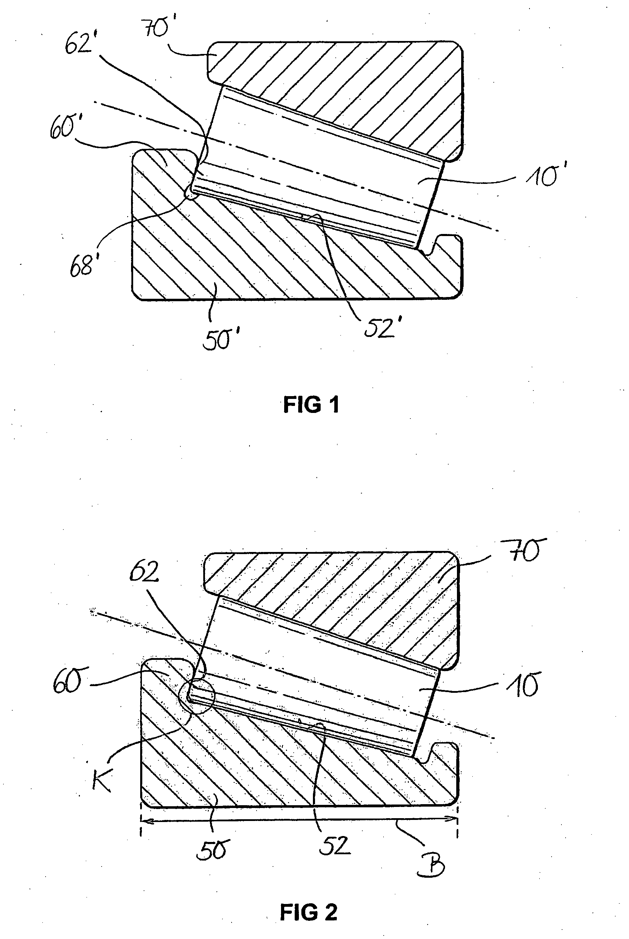

Die Figur 1 zeigt die Längsschnittflächen eines an einer Umfangstelle längsgeschnittenen einreihigen Radialkegelrollenlagers gemäß dem Stand der Technik. Dabei sind Wälzkörper 10' zwischen einem äußeren Laufbahnelement 70' und einem inneren Laufbahnelement 50' angeordnet. Das innere Laufbahnelement 50' umfasst am durchmessergrößeren Ende einen Bord 60', an dem ein Bereich der durchmessergrößeren Stirnseiten der Wälzkörper 10' zum Anlaufen vorgesehen ist. Die den durchmessergrößeren Stirnseiten der Wälzkörper 10' unmittelbar gegenüberliegende Innenseite 62' des Bords 60' geht dabei in Form eines Hinterschnitts oder Hinterstichs 68' in die Abrollfläche 52' des inneren Laufbahnelements 50' über.

Die Figur 2 zeigt als ein Ausführungsbeispiel der Erfindung die Längsschnittflächen eines an einer Umfangstelle längsgeschnittenen einreihigen Radialkegelrollenlagers. Dabei sind zwischen einem äußeren Laufbahnelement 70 und einem inneren Laufbahnelement 50 kegelstumpfartige Wälzkörper 10 angeordnet. Ein Käfig, in dem die Wälzkörper 10 angeordnet sind, ist aus Gründen der Übersichtlichkeit nicht dargestellt. Gegenüber dem inneren Laufbahnelement 50' des Kegelrollenlagers gemäß dem Stand der Technik nach Figur 1 ist beim erfindungsgemäßen inneren Laufbahnelement 50 gemäß der Figur 2 ein Übergangsbereich von der den Wälzkörperstirnseiten zugewandten Innenseite 62 des Bords 60 am durchmessergrößeren axialen Ende des inneren Laufbahnelements 50 hin zur Abrollfläche 52 für die Wälzkörper 10 frei von einem Hinterschnitt oder Hinterstich ausgebildet.

Dabei erkennt man sofort bei Vergleich der Figuren 1 und 2, dass beim erfindungsgemäßen inneren Laufbahnelement 50 der Figur 2 aufgrund des nicht vorhandenen Hinterschnitts der Bord 60 bei gleicher Festigkeit mit einer geringeren axialen Ausdehnung ausgebildet werden kann als beim inneren Laufbahnelement 50' der Figur 1 gemäß dem Stand der Technik. Damit verkürzt sich mit Vorteil auch die Gesamtlänge B des inneren Laufbahnelements 50 gegenüber dem Stand der Technik.

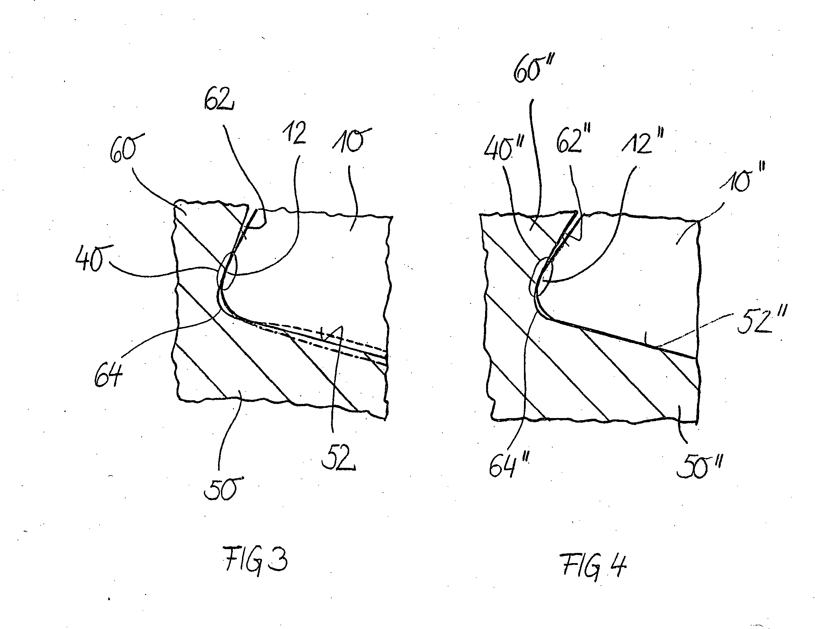

Die Figur 3 zeigt eine Ausschnittsvergrößerung des mit einem Kreis K markierten Bereichs der Figur 2. Aus der Figur 3 erkennt man, dass die Innenseite 62 des Bords 60, ausgehend von einem mittleren Bereich, zwischen ihrem inneren und äußeren Rand hin zur Abrollfläche 52 im wesentlichen eben ausgebildet ist und dann in Form eines einfach gekrümmten Bogens 64 in die Abrollfläche 52 für die Wälzkörper 10 übergeht, die eben ausgebildet ist, aber auch gemäß der gestrichelten und strichpunktierten Darstellung zu den Wälzkörpern 10 hin ausgebaucht bzw. nach innen hin eingebaucht ausgebildet sein kann. Dabei sind die Wälzkörper 10 in einem Außenbereich ihrer Stirnseite derart mit einer Ausbauchung 12 ausgebildet, dass der bestimmungsgemäße Berührbereich 40 zwischen den Wälzkörperstirnseiten und der Innenseite 62 des Bords 60 mit den eingangs beschriebenen Vorteilen nahe hin zur Abrollfläche 52 gelegt ist.

In einem Übergangsbereich vom Außenmantel hin zu den Stirnseiten sind die Wälzkörper 10 mit entsprechenden Verrundungen ausgebildet, wobei die Außenmantelfläche zwischen den Übergangsbereichen ebenfalls eben, nach außen ausgebaucht oder nach innen eingebaucht ausgebildet sein kann. Dazu können entsprechende, vorausgehend zur Figur 3 beschriebene Ausbildungen der Abrollfläche 52 zukombiniert werden. Besonders hervorzuheben sind dabei eine Ausbauchung der Abrollfläche 52 zu den Wälzkörpern 10 hin in Verbindung mit zwischen den Übergangsbereichen hin zu den Stirnseiten ebenen Außenmänteln bzw. nach außen hin ausgebauchte Außenmänteln der Wälzkörper 10 sowie eine eben ausgebildete Abrollfläche 52 in Verbindung mit ebenfalls eben ausgebildeten oder nach außen hin ausgebauchten Außenmänteln der Wälzkörper 10. Weiterhin ist ebenfalls denkbar, eine zu den Wälzkörpern 10 hin ausgebauchte Ausbildung der Abrollfläche 52 mit dazu passenden, entsprechend eingebauchten Wälzkörpern 10 oder eine nach innen hin eingebauchte Abrollfläche 52 mit dazu passenden, entsprechend ausgebauchten Wälzkörpern 10 zu kombinieren.

Die Figur 4 zeigt als ein weiteres Ausführungsbeispiel der Erfindung einen ausschnittsweisen Längsschnitt entsprechend dem der Figur 3, wobei anstelle des ebenen Verlaufs der Innenseite 62 des Bords 60 der Figur 3 ein nach innen eingebauchter Verlauf tritt. Ansonsten gilt für die Figur 4 das vorausgehend zur Figur 3 Beschriebene entsprechend. Dabei werden in der Figur 4 für der Figur 3 entsprechende Bauelemente und Bereiche die gleichen Bezugszeichennummern wie bei der Figur 3, ergänzt um zwei Hochstriche verwendet. Dabei kann eine Ausbildung entsprechend der Figur 3 beispielsweise bei kleiner dimensionierten Kegelrollenlagern und eine Ausbildung entsprechend der Figur 4 bei eher größeren Kegelrollenlagern eingesetzt werden.

## Patentansprüche

1. Kegelrollenlagerung, umfassend kegelstumpfartige Wälzkörper (10) und ein inneres Laufbahnelement (50) für die kegelstumpfartigen Wälzkörper mit einer Abrollfläche (52) für die Wälzkörper und mit einem eine Innenseite (62) aufweisenden Bord (60) an einer der Stirnseiten der Wälzkörper, bei dem ein Bereich der Innenseite (62) zum Berührten durch Bereiche der Wälzkörperstirnseiten vorgesehen ist, wobei bei einer Betrachtung, die von einem mittleren Bereich der Innenseite zwischen ihrem äußeren und inneren Rand ausgeht und entlang einer Wälzkörperstirnseite radial hin zur Abrollfläche (52) gerichtet ist, das Laufbahnelement in einem Übergangsbereich von der Innenseite hin zur Abrollfläche bezogen auf die Betrachtungsrichtung frei von einem Hinterschnitt ausgebildet ist, wobei die bestimmungsgemäße Berührung zwischen der Wälzkörperstirnseite und der Innenseite (62) von der Wälzkörperhauptachse aus in einem Bereich von 85 % bis 98 % des Radius der Wälzkörperstirnseite stattfindet.

2. Kegelrollenlagerung, umfassend kegelstumpfartige Wälzkörper (10) und ein inneres Laufbahnelement (50) für kegelstumpfartige Wälzkörper mit einer Abrollfläche (52) für die Wälzkörper und mit einem eine Innenseite (62) aufweisenden Bord (60) an einer der Stirnseiten der Wälzkörper, bei dem ein Bereich der Innenseite zum Berühren durch Bereiche der Wälzkörperstirnseiten vorgesehen ist, wobei bei einer von einem mittleren Bereich der Innenseite (62) zwischen ihrem äußeren und inneren Rand ausgehenden, senkrecht hin zu Abrollfläche (52) gerichteten Betrachtung das Laufbahnelement in einem Übergangsbereich von der Innenseite hin zur Abrollfläche (52) frei von einem Hinterstich ausgebildet ist, wobei die bestimmungsgemäße Berührung zwischen der Wälzkörperstirnseite und der Innenseite (62) von der Wälzkörperhauptachse aus in einem Bereich von 85 % bis 98 % des Radius der Wälzkörperstirnseite stattfindet.

3. Kegelrollenlagerung nach einem der Ansprüche 1 oder 2, wobei die Innenseite (62) wenigstens im Berührbereich zu den Wälzkörpern (10) entsprechend einem ebenen Kegelstumpfmantel ausgebildet ist.

4. Kegelrollenlagerung nach einem der Ansprüche 1 oder 2, wobei die Innenseite (62) wenigstens im Berührbereich zu den Wälzkörpern (10) entsprechend einem zum Inneren des Bordes (60) hin eingebauchten Kegelstumpfmantel ausgebildet ist.

5. Kegelrollenlagerung nach einem der Ansprüche 1 bis 4, wobei bei Betrachtung des Längsschnitts die Innenseite (62) in Form eines einfach gekrümmten Bogens (64) in die Abrollfläche (52) übergeht.

6. Kegelrollenlagerung nach einem der Ansprüche 1 bis 5, wobei eine axiale Länge des Laufbahnelements größer B·cos α und kleiner gleich 1,4·B·cos α ist, wobei B die axiale Länge eines Wälzkörpers (10) ohne Berücksichtigung von stirnseitigen Vertiefungen und α der äußere Kontaktwinkel des Wälzkörpers (10) ist.

7. Kegelrollenlagerung nach einem der Ansprüche 1 bis 6, wobei der Bereich insbesondere 90 % bis 98 % ist.

8. Kegelrollenlagerung nach einem der Ansprüche 1 bis 7, wobei wenigstens einer der Wälzkörper (10) stirnseitig wenigstens im Berührbereich mit einer Ausbauchung (12) ausgebildet ist.

9. Kegelrollenlagerung nach Anspruch 8, wobei eine Einbauchung der Innenseite (62) im Berührbereich bezüglich der Ausbauchung (12) der Wälzkörperstirnseite mit einem größeren Krümmungsradius ausgebildet ist.

10. Kegelrollenlagerung nach einem der Ansprüche 1 bis 9, wobei die Abrollfläche (52) entsprechend einem ebenen Kegelstumpfmantel oder entsprechend einem zu den Wälzkörpern (10) hin ausgebauchten Kegelstumpfmantel ausgebildet ist.

11. Kegelrollenlagerung nach Anspruch 10, wobei der Außenmantel wenigstens eines der Wälzkörper (10) zwischen den Übergangsbereichen zu seinen beiden Stirnseiten hin nach außen ausgebaucht, eben oder nach innen eingebaucht ausgebildet ist.

12. Kegelrollenlagerung nach einem der Ansprüche 1 bis 9, wobei die Abrollfläche (52) entsprechend einem nach innen hin eingebauchten Kegelstumpfmantels ausgebildet ist und der Außenmantel wenigstens eines der Wälzkörper (10) zwischen den Übergangsbereichen zu seinen beiden Stirnseiten hin nach außen ausgebaucht ausgebildet ist.

13. Kegelrollenlagerung nach einem der Ansprüche 1 bis 12, wobei die Kegelrollenlagerung als äußere Abrollfläche für die Wälzkörper ein äußeres Laufbahnelement (70) umfasst.

## Claims

1. Tapered roller bearing, comprising frustoconical rolling bodies (10) and an inner raceway element (50) for the frustoconical rolling bodies with a rolling face (52) for the rolling bodies and with a rim (60) which has an inner side (62) on one of the end sides of the rolling bodies, in which a region of the inner side (62) is provided for contact with regions of the rolling-body end sides, in one view the raceway element being configured so as to be free from an undercut in a transitional region from the inner side towards the rolling face in relation to a viewing direction which starts from a middle region of the inner side between its outer and inner edge and is directed radially towards the rolling face (52) along a rolling-body end side, the designated contact between the rolling-body end side and the inner side (62) taking place in a range of from 85% to 98% of the radius of the rolling-body end side from the rolling-body main axis.

2. Tapered roller bearing, comprising frustoconical rolling bodies (10) and an inner raceway element (50) for frustoconical rolling bodies with a rolling face (52) for the rolling bodies and with a rim (60) which has an inner side (62) on one of the end sides of the rolling bodies, in which a region of the inner side (62) is provided for contact with regions of the rolling-body end sides, the raceway element being configured so as to be free from a recess in a transitional region from the inner side towards the rolling face (52) in a view which starts from a middle region of the inner side (62) between its outer and inner edge and is directed perpendicularly towards the rolling face (52), the designated contact between the rolling-body end side and the inner side (62) taking place in a range of from 85% to 98% of the radius of the rolling-body end side from the rolling-body main axis.

3. Tapered roller bearing according to either of Claims 1 and 2, the inner side (62) being configured at least in the contact region with the rolling bodies (10) in accordance with a planar frustoconical shell.

4. Tapered roller bearing according to either of Claims 1 and 2, the inner side (62) being configured at least in the contact region with the rolling bodies (10) in accordance with a frustoconical shell which is indented towards the interior of the rim (60).

5. Tapered roller bearing according to one of Claims 1 to 4, the inner side (62) merging into the rolling face (52) in the form of a single-curved arc (64) when the longitudinal section is viewed.

6. Tapered roller bearing according to one of Claims 1 to 5, an axial length of the raceway element being greater than B•cos α and being less than or equal to 1.4•B•cos α, B being the axial length of a rolling body (10) without consideration of end-side depressions and α being the outer contact angle of the rolling body (10).

7. Tapered roller bearing according to one of Claims 1 to 6, the range being, in particular, from 90% to 98%.

8. Tapered roller bearing according to one of Claims 1 to 7, at least one of the rolling bodies (10) being configured with a bulge (12) on the end side at least in the contact region.

9. Tapered roller bearing according to Claim 8, an indentation of the inner side (62) being configured in the contact region with a greater radius of curvature with regard to the bulge (12) of the rolling-body end side.

10. Tapered roller bearing according to one of Claims 1 to 9, the rolling face (52) being configured in accordance with a planar frustoconical shell or in accordance with a frustoconical shell which is bulged towards the rolling bodies (10).

11. Tapered roller bearing according to Claim 10, the outer shell of at least one of the rolling bodies (10) being configured between the transitional regions towards its two end sides such that it is bulged outwards, planar or indented inwards.

12. Tapered roller bearing according to one of Claims 1 to 9, the rolling face (52) being configured in accordance with an inwardly indented frustoconical shell and the outer shell of at least one of the rolling bodies (10) being configured between the transitional regions towards its two end sides such that it is bulged outwards.

13. Tapered roller bearing according to one of Claims 1 to 12, the tapered roller bearing comprising an outer raceway element (70) as an outer rolling face for the rolling bodies.

## Revendications

1. Roulement à rouleaux coniques comprenant des corps de roulement (10) en forme de troncs de cône et un élément de piste de roulement interne (50) pour les corps de roulement en forme de troncs de cône, avec une surface de roulement (52) pour les corps de roulement et avec un bord (60) présentant un côté interne (62) au niveau de l'un des côtés frontaux des corps de roulement, une région du côté interne (62) étant prévue pour venir en contact avec des régions des côtés frontaux des corps de roulement, l'élément de piste de roulement, en regardant depuis une région centrale du côté interne entre son bord extérieur et son bord intérieur, et suivant une orientation le long d'un côté frontal des corps de roulement radialement vers la surface de roulement (52), étant réalisé sans contre-dépouille dans une région de transition depuis le côté interne vers la surface de roulement par rapport au sens d'observation, le contact approprié entre le côté frontal des corps de roulement et le côté interne (62) se produisant à partir de l'axe principal des corps de roulement dans une région constituant 85 % à 98 % du rayon du côté frontal des corps de roulement.

2. Roulement à rouleaux coniques comprenant des corps de roulement (10) en forme de troncs de cône et un élément de piste de roulement interne (50) pour les corps de roulement en forme de troncs de cône, avec une surface de roulement (52) pour les corps de roulement et avec un bord (60) présentant un côté interne (62) au niveau de l'un des côtés frontaux des corps de roulement, une région du côté interne étant prévue pour venir en contact avec des régions des côtés frontaux des corps de roulement, l'élément de piste de roulement, en regardant depuis une région centrale du côté interne (62) entre son bord extérieur et son bord intérieur, et suivant une orientation perpendiculairement vers la surface de roulement (52), étant réalisé sans contre-dépouille dans une région de transition depuis le côté interne vers la surface de roulement (52), le contact approprié entre le côté frontal des corps de roulement et le côté interne (62) se produisant à partir de l'axe principal des corps de roulement dans une région constituant 85 % à 98 % du rayon du côté frontal des corps de roulement.

3. Roulement à rouleaux coniques selon l'une quelconque des revendications 1 ou 2, dans lequel le côté interne (62), au moins dans la région de contact avec les corps de roulement (10), est réalisé de manière correspondant à une enveloppe tronconique plane.

4. Roulement à rouleaux coniques selon l'une quelconque des revendications 1 ou 2, dans lequel le côté interne (62), au moins dans la région de contact avec les corps de roulement (10), est réalisé de manière correspondant à une enveloppe tronconique formée en creux vers l'intérieur du bord (60).

5. Roulement à rouleaux coniques selon l'une quelconque des revendications 1 à 4, dans lequel, en regardant en coupe longitudinale, le côté interne (62) se prolonge en forme d'arc de courbure simple (64) par la surface de roulement (52).

6. Roulement à rouleaux coniques selon l'une quelconque des revendications 1 à 5, dans lequel une longueur axiale de l'élément de piste de roulement est supérieure à B·cos α et inférieure ou égale à 1,4·B·cos α, B étant la longueur axiale d'un corps de roulement (10) sans tenir compte des renfoncements frontaux et α étant l'angle de contact extérieur du corps de roulement (10).

7. Roulement à rouleaux coniques selon l'une quelconque des revendications 1 à 6, la région étant notamment de 90 % à 98 %.

8. Roulement à rouleaux coniques selon l'une quelconque des revendications 1 à 7, dans lequel au moins l'un des corps de roulement (10) est réalisé du côté frontal au moins dans la région de contact avec un bombement (12).

9. Roulement à rouleaux coniques selon la revendication 8, dans lequel une partie en creux du côté interne (62) dans la région de contact est réalisée par rapport au bombement (12) du côté frontal des corps de roulement avec un plus grand rayon de courbure.

10. Roulement à rouleaux coniques selon l'une quelconque des revendications 1 à 9, dans lequel la surface de roulement (52) est réalisée de manière correspondant à une enveloppe tronconique plane ou de manière correspondant à une enveloppe tronconique bombée vers les corps de roulement (10).

11. Roulement à rouleaux coniques selon la revendication 10, dans lequel l'enveloppe extérieure d'au moins l'un des corps de roulement (10) entre les régions de transition vers ses deux côtés frontaux est réalisée sous forme bombée vers l'extérieur, plane ou formée en creux vers l'intérieur.

12. Roulement à rouleaux coniques selon l'une quelconque des revendications 1 à 9, dans lequel la surface de roulement (52) est réalisée de manière correspondant à une enveloppe tronconique formée en creux vers l'intérieur et l'enveloppe extérieure d'au moins l'un des corps de roulement (10) est réalisée de manière bombée vers l'extérieur entre les régions de transition vers ses deux côtés frontaux.

13. Roulement à rouleaux coniques selon l'une quelconque des revendications 1 à 12, dans lequel le roulement à rouleaux coniques comprend, en tant que surface de roulement extérieure pour les corps de roulement, un élément de piste de roulement extérieur (70).
